# EUROPÄISCHE PATENTSCHRIFT

(11) **EP 0 532 873 B1**
(45) Veröffentlichungstag und Bekanntmachung des Hinweises auf die Patenterteilung: **09.03.1994**
(21) Anmeldenummer: 92113156.1
(22) Anmeldetag: 01.08.1992
(51) Int. Cl.: B29C 49/22, B65D 83/00, B05B 11/02

(54) **Behälter**
Container
Récipient

(30) Priorität: 30.11.1991 DE 4139555; 18.09.1991 DE 4131035
(43) Veröffentlichungstag der Anmeldung: 24.03.1993
(73) Patentinhaber: GAPLAST GmbH, D-82442 Saulgrub (DE); Boehringer Ingelheim International GmbH, 55216 Ingelheim (DE)
(72) Erfinder: Kneer, Roland, W-8105 Farchant (DE); Heiland, Christoph, W-8111 Saulgrub (DE)
(74) Vertreter: Flosdorff, Jürgen, Dr.

(56) Entgegenhaltungen:
- EP-A- 0 182 094

## Beschreibung

Die Erfindung betrifft einen Behälter gemäß Oberbegriff des Anspruchs 1, insbesondere einen flaschenförmigen Behälter, bestehend aus einem im wesentlichen formstabilen Außenbehälter und einem leicht verformbaren Innenbehälter bzw. Innenbeutel, die im Coextrusionsblasverfahren aus unterschiedlichen, keine Verbindung miteinander eingehenden thermoplastischen Kunststoffen hergestellt sind, wobei der Behälter einen oberen Schulterabschnitt hat, der vorzugsweise in einen Behälterhals übergeht, an dem zum Ausbringen der Füllung des Innenbeutels eine Pumpe befestigt ist.

Die Erfindung betrifft ebenfalls ein Verfahren zur Herstellung eines Behälters gemäß Oberbegriff des Anspruchs 8.

Ein derartiger Behälter wird beispielsweise zur Aufnahme und dosierten Abgabe von medizinischen Flüssigkeiten verwendet, wobei durch manuelle Betätigung der mit einem Ventil versehenen Pumpe in dem Innenbeutel der für dessen Entleerung erforderliche Unterdruck erzeugt werden kann.

Damit sich der an sich leicht verformbare Innenbeutel bei Aufbringung des Unterdrucks zur dosierten Abgabe der Flüssigkeit zusammenziehen kann, ist es bei einem Behälter der betrachteten Art erforderlich, daß in den Zwischenraum zwischen dem formstabilen Außenbehälter und dem leicht verformbaren Innenbeutel Luft eintreten kann, damit dort durch Volumenverringerung des Innenbeutels kein Unterdruck entsteht, der den weiteren Entleerungsvorgang beeinträchtigen und schließlich unmöglich machen würde.

Zur Lösung dieses Problems ist aus der EP 0 182 094, auf welcher die Oberbegriffe der Ansprüche 1 und 8 basieren, ein flaschenförmiger Behälter bekannt, dessen Außenbehälter an seinem bodenseitigen Ende eine offene Naht aufweist, während der Innenbehälter an dieser Stelle durch eine Schweißnaht dicht verschlossen ist. Die Ausbildung der offenen Bodennaht des Außenbehälters wird bei dem stets erforderlichen Abquetschen von Überschußmaterial des coextrudierten Vorformlings am Boden der Blasform hervorgerufen, wobei die Wandbereiche des Innenbeutels im Quetschbereich zwischen den einander gegenüberliegenden Wandbereichen des den Außenbehälter bildenden Materialschlauchs liegen und hiermit die Verschweißung der Bodennaht des Außenbehälters verhindern. Nach Beendigung des Blasvorgangs wird beim Öffnen der Blasform eine Kraft auf den Boden des Außenbehälters aufgebracht, die die unverschweißte Naht so weit bleibend öffnet, daß durch diese bodenseitige Öffnung permanent Luft mit dem Druck der umgebenden Atmosphäre in den Außenbehälter eintritt, so daß sich bei dem vorbekannten Behälter zwischen dem Außenbehälter und dem Innenbeutel kein Unterdruck bilden kann.

Dieser vorbekannte Behälter hat mehrere Nachteile. Die langgestreckte, aufgeweitete Naht im Boden des Außenbehälters ermöglicht ohne weiteres den Eingriff ins Innere des Außenbehälters, so daß der weiche Innenbeutel beschädigt werden kann, mit der Folge, daß eine darin aufgenommene Flüssigkeit ausfließen kann. Außerdem können Fremdstoffe in den Innenraum zwischen Außenbehälter und Innenbeutel eintreten. Schwerwiegender ist noch, daß der offene Spalt im Boden des Behälters den Eindruck hervorrufen kann, der Behälter sei beschädigt, was insbesondere bei Verwendung des Behälters auf pharmazeutischem Gebiet zu Beanstandungen seitens der Käufer führen kann.

Ein weiterer Nachteil des vorbekannten Behälters besteht darin, daß zur Sicherstellung eines möglichst vollständigen Entleerungsvorganges ein Steigrohr in den Innenbeutel eingreifen muß, da der Innenbeutel in axialer Richtung des Behälters ansonsten nicht gehalten ist und bei teilweiser Entleerung so zusammenfallen könnte, daß ein weiterer Entleerungsvorgang unmöglich wird. Das Steigrohr hält den Innenbeutel bei dem vorbekannten Behälter in gestreckter Lage, wodurch jedoch die Kosten des vollständigen, funktionsfähigen Behälters nicht unbeträchtlich erhöht werden. Ein großer Nachteil des Steigrohrs liegt darin, daß der Behälter in der Überkopflage nicht einwandfrei benutzbar und vollständig entleerbar ist.

Der vorliegenden Erfindung liegt die Aufgabe zugrunde, einen Behälter der betrachteten Art so weiter zu entwickeln, daß die vorstehend aufgeführten Nachteile vermieden sind. Dabei soll der Behälter vorzugsweise eine Flaschenform haben und in der Überkopflage zuverlässig zur Abgabe einer Flüssigkeit bereit sein, ohne daß die Erfindung jedoch auf die Flaschenform und den flüssigen Inhalt beschränkt ist.

Diese Aufgabe wird erfindungsgemäß durch die im Kennzeichen des Anspruchs 1 angegebenen Merkmale gelöst. Vorteilhafte Weiterbildungen der Erfindung sind in den Unteransprüchen gekennzeichnet.

Gemäß der Erfindung hat der im wesentlichen formstabile Außenbehälter an seinem Boden eine geschlossene, wenigstens teilweise verschweißte Naht, die die Schweißnaht des Innenbeutels überdeckt, womit der Boden des Außenbehälters geschlossen ist und außerdem die Schweißnaht des Innenbehälters in dem derart geschlossenen Bodenbereich des Außenbehälters gehalten bzw. dauerhaft eingeklemmt ist. Der Außenbehälter hat ferner an seinem Schulterabschnitt wenigstens eine unverschweißte Naht, die durch gegenüberliegende, nicht miteinander verschweißte Wandabschnitte des Außenbehälters begrenzt ist, während der Innenbeutel in diesem Bereich durch Schweißnähte dicht verschlossen ist, so daß hier Luft in den Zwischenraum zwischen dem Außenbehälter und dem Innenbehälter eintreten kann. Vorzugsweise sind zwei unverschweißte Nähte über einen Teil der beiden Schulterabschnitte des Behälters vorgesehen.

Die unverschweißten Nähte an dem Schulterabschnitt des Außenbehälters können dadurch ausgebildet werden, daß der zweischichtige, schlauchförmige Vorformling, aus dem der erfindungsgemäße Behälter geblasen wird, einen größeren Durchmesser hat als die Behälteröffnung bzw. gegebenenfalls als der Hals des Behälters, so daß im Schulterbereich der schlauchförmige Vorformling beim Schließen der Blasform zur Beseitigung des Überschußmaterials abgequetscht wird. Hier liegt dann im Quetschbereich des Schulterabschnitts Material des Innenbeutels zwischen dem hierdurch beabstandeten Material des Außenbehälters, so daß das letztere nicht miteinander verschweißt werden kann.

Die geschlossene, wenigstens teilweise verschweißte Naht am Bode des Außenbehälters wird durch besondere Formgebung des bodenseitigen Quetschbereichs der Blasform ausgebildet, wobei hier sowohl das Überschußmaterial abgequetscht als auch Material des Außenbehälters beidseitig der Naht verlagert und zu einem nach außen weisenden Steg zusammengeführt wird. Diese beiden Vorgänge des Abquetschens und des beidseitigen Zusammenführens von Material des Außenbehälters kann gleichzeitig beim Schließen der Form erfolgen, oder aber in getrennten, zeitlich aufeinanderfolgenden Schritten, indem nach dem Blasformen des erfindungsgemäßen Behälters das noch plastisch verformbare Außenbehälter-Material in einem gesonderten Schritt zu einer die Quetschnaht überdeckenden geschlossenen Schweißnaht zusammengeführt wird.

Der Boden des erfindungsgemäßen Behälters ist vorzugsweise derart konkav geformt, daß die von der zurückversetzten Bodenfläche abstehende Schweißnaht nicht über den ringförmigen Außenbereich des Bodens vorsteht, so daß durch die entweder teilweise oder vollständig verschweißte, jedenfalls geschlossene Naht die Standsicherheit des Behälters nicht beeinträchtigt ist.

Die Schweißnaht des Innenbeutels ist in dem Bodenabschnitt des Außenbehälters eingeklemmt, so daß der Innenbeutel in axialer Richtung des flaschenförmigen Behälters gehalten ist. Damit ist die Anordnung eines Steigrohres überflüssig, da der gestreckt gehaltene Innenbeutel auch ohne dieses Bauteil vollständig entleert werden kann, so daß die Kosten des erfindungsgemäßen Behälters verringert sind. Von wenigstens ebensolcher Bedeutung ist, daß der erfindungsgemäße Behälter in Überkopflage einwandfrei funktioniert und vollständig entleert werden kann.

In den geschlossenen Bodenbereich des Behälters können weder Fremdstoffe eintreten, noch können hier spitze Gegenstände eingeführt werden, um mutwillig den Innenbeutel zu beschädigen, was bei dem vorbekannten Behälter ohne weiters möglich ist.

Die geschlossene Bodennaht des Außenbehälters, die die axiale Halterung des Innenbeuteils ohne Steigrohr ermöglicht, hat ferner dann eine große Bedeutung für das Herstellungsverfahren des erfindungsgemäßen Behälters, wenn zum Zwecke eines permanenten Druckausgleichs zwischen Innen- und Außenbeutel Löcher in der Wandung des Außenbehälters in dessen oberen Bereich ausgebildet werden sollen, was weiter unten noch näher beschrieben wird.

Wie bereits erwähnt, läßt die offene Naht bzw. lassen die offenen Nähte im Bereich des Schulterabschnitts des Außenbehälters den Durchtritt von Luft zu. Wenn diese unverschweißten Nähte groß genug sind, kann durch diese ein permanenter Druckausgleich zwischen Innen- und Außenbeutel erfolgen, so daß keine weiteren Maßnahmen hierzu erforderlich sind.

In aller Regel dürfte dies jedoch nicht der Fall sein, da die einander unverbunden gegenüberliegenden Randkanten des Außenbehälters im Bereich der offenen Naht bei Unterdruck das Bestreben haben, sich aneinander anzulegen. Aus diesem Grunde wird in einer vorteilhaften Ausgestaltung der Erfindung vorgeschlagen, wenigstens ein Loch, vorzugsweise mehrere Löcher in der Wand des Außenbehälters auszubilden, die den permanenten Druckausgleich ermöglichen. Mit besonderem Vorteil wird vorgeschlagen, diese Löcher im oberen Bereich des Außenbehälters vorzusehen, d.h. im Schulterbereich oder im oberen Abschnitt der vorzugsweise zylindrischen Außenwand des Außenbehälters, da hier diese Löcher auf die weiter unten beschriebene Weise erfindungsgemäß kaschiert werden können.

Erfindungsgemäß werden die Löcher nach dem Blasvorgang dadurch hergestellt, daß ein Unterdruck auf den Innenbeutel einwirkt, so daß dieser sich zusammenzieht. Da der Innenbeutel am Boden des Außenbeutels verankert ist, fällt er bei Einwirkung des Unterdrucks radial zusammen, wobei er sich auf ganzer Länge von der Wandung des Außenbehälters löst. Wäre der Innenbeutel nicht am Boden gehalten, würde er sich statt dessen vom Bodenbereich abheben und nach oben, in Richtung des Behälterhalses zusammenziehen, wobei er im oberen zylindrischen Wandbereich und im Bereich des Schulterabschnitts in Anlage an der Wandung des Außenbehälters verbleiben würde. In diesem letzteren Falle wäre es unmöglich, im oberen Bereich des Außenbehälters Löcher auszubilden, da hierbei der Innenbeutel beschädigt würde.

Nach dem erfindungsgemäßen Herstellungsverfahren löst sich hingegen -wie bereits gesagt- der Innenbeutel vollständig von der Wand des Außenbehälters (mit Ausnahme der unteren Verankerungsnaht und vorzugsweise des Halsbereichs).

Der Unterdruck kann dadurch auf den Innenbeutel aufgebracht werden, daß ein Dorn formschlüssig (gegebenenfalls mit einer ringförmigen Dichtung) in den Behälterhals eingeführt wird und der Dorn über eine Saugleitung mit einer Vakuumpumpe in Verbindung steht. Der Druckausgleich erfolgt vorzugsweise durch die unverschweißten Schulternähte. Die Erfindung ist hierauf jedoch nicht beschränkt, vielmehr kann die Anordnung auch so getroffen werden, daß Luft im Bereich des Behälterhalses zwischen dem Außenbehälter und dem Innenbehälter eintritt.

Die Löcher können durch alle geeigneten Verfahren in der Wand des Außenbehälters ausgebildet werden, beispielsweise durch Ultraschall oder mechanisch durch Perforieren mittels nadelartiger Stifte.

Der Zutritt von Luft durch die Schulternähte kann dadurch während des Schritts der Ausbildung der Löcher gefördert werden, daß der Behälter seitlich derart zusammengedrückt wird, daß die einander gegenüberliegenden Randkanten des Außenbehälters im Bereich der Schulternähte zusätzlich voneinander beabstandet werden. Dies sollte vorzugsweise in einem Zustand geschehen, in dem der Außenbehälter nicht mehr plastisch verformbar ist, so daß der Behälter wieder in die Ausgangsform zurückkehrt.

Erfindungsgemäß kann gleichzeitig mit dem Unterdruck von außen ein Überdruck auf den Innenbeutel ausgeübt werden, indem der Behälter in eine mit einer Druckluftquelle verbundene Kammer aufgenommen wird. Überdruck und Unterdruck können gleichzeitig intermittierend ausgeübt werden, wodurch sich der Innenbeutel besser von der Innenwand des Außenbehälters löst.

Alle Öffnungen in der Wandung des Außenbehälters im Schulter- und oberen Wandbereich sind -im Gegensatz zum Bodenbereich des Behälters- zu kaschieren, wozu vorgeschlagen wird, diesen Bereich mit dem Gehäuse der an der Behälteröffnung anzubringenden Pumpe außen zu überdecken. Hierzu wird vorgeschlagen, das Gehäuse der üblicherweise verwendeten Pumpen so zu verlängern, daß es den gesamten Schulterbereich und gegebenenfalls einen Teil der vorzugsweise zylindrischen Außenwand des Außenbehälters umfaßt. Damit liegen die Öffnungen nicht nach außen frei, so daß der Zwischenraum zwischen dem Außengehäuse und dem Innenbeutel vor Verschmutzung bewahrt und die Unverletzlichkeit des Beutels durch äußere Einwirkung gewährleistet ist (wenn das Außengehäuse nicht beschädigt wird). Außerdem kann nicht mehr der fälschliche Eindruck entstehen, der Behälter sei beschädigt.

Die unverschweißten Schulternähte sollten sich vorzugsweise lediglich über einen Teil des Schulterabschnitts bis zur Behälteröffnung erstrecken, was dann der Fall ist, wenn der Durchmesser des schlauchförmigen Rohlings kleiner als der Durchmesser der vorzugsweise zylindrischen Behälterwand ist. Der verbleibende geschlossene äußere Ring des Schulterabschnitts erhöht die Festigkeit des Behälters.

Wie gesagt, hat der erfindungsgemäße Behälter vorzugsweise eine Flaschenform, wobei der Schulterabschnitt in einen Behälterhals übergeht, so daß sich die unverschweißten Nähte des Schulterbereichs in dem Halsbereich bis zu dessen Öffnung fortsetzen. In diesem Zusammenhang wird mit Vorteil vorgeschlagen, daß am Rand des Behälterhalses, an dessen Öffnung, ein nach außen weisender Ring angeformt ist, auf den die Pumpe mit einer zugehörigen Umfangswand aufschnappen kann. Der nach außen weisende Schnapprand des Behälterhalses wird bei seiner Ausbildung durch einen in die Blasform eingeführten Dorn durch Verlagerung von Material des Außenbehälters im Bereich der Quetschnaht verschweißt, so daß der Schnappring ringsum fest geschlossen ist. Hierdurch wird ein dichter Anschluß der auf den Schnappring aufgesetzten und ins Innere des Innenbeutels eingreifenden Pumpe ermöglicht. Zusätzlich wird der Schnappring durch eine diese umgreifende, aufgeschnappte Umfangswand der Pumpe radial nach innen beaufschlagt, so daß der Schnappring selbst dann festgehalten wäre, wenn seine Verschweißung an der Quetschkante nur unvollständig ausfüllen würde. Damit ist durch die besondere Ausgestaltung des Randes des Behälterhalses gewährleistet, daß die Pumpe dicht und fest an der Behälteröffnung angesetzt werden kann, so daß eine einwandfreie Funktionsweise gesichert ist.

Die Erfindung ist jedoch nicht auf diese Ausgestaltung beschränkt, sondern es kann z.B. eine Schraubverbindung am Behälterhals vorgesehen sein.

Mit Vorteil wird vorgeschlagen, daß sich die Innenfläche des Halses nach oben leicht kegelförmig verbreitert, wobei dieser Kegelsitz der Pumpe dazu beträgt, daß der Innenbeutel im Halsbereich festgehalten ist. Im übrigen wird durch Kalibrieren des Halsbereichs Material vermischt, so daß hierdurch Außenbehälter und Innenbeutel im Halsbereich zusammenhalten.

Als Material für den Außenbehälter wird vorzugsweise PP vorgeschlagen, während der Innenbeutel zweckmäßigerweise aus Polyethylen besteht. Selbstverständlich ist die Erfindung nicht auf die Verwendung dieser Materialien beschränkt, vielmehr kommen auch andere thermoplastische Werkstoffe in Betracht, die bei der Coextrusion und nachfolgenden Blasvorgang keine Verbindung miteinander eingehen.

Die ferner erfindungsgemäß vorgeschlagene Verwendung von Polypropylen mit einem Additiv, vorzugsweise einem Gleitmittel, welches das Ablösen von der Polyethylenschicht erleichtert, gewährleistet die Recyclingfähigkeit des Behälters.

Die Schweißnaht des Außenbehälters im Quetschbereich des Bodens hat querschnittlich vorzugsweise eine drachenähnliche Form und fluchtet mit der Schweißnaht des Innenbeutels, die durch den zusätzlichen Wandabschnitt des Außenbehälters fest eingeklemmt ist.

Der erfindungsgemäße Behälter vermeidet die oben aufgeführten Nachteile des vorbekannten Behälters, ohne daß hierzu aufwendige Mittel erforderlich sind. Die Öffnungen im Schulterbereich und gegebenenfalls Löcher im Schulterbereich oder dem oberen Bereich der Wand des Außenbehälters lassen sich durch einen diesen Bereich überdeckenden Gehäuseabschnitt der Pumpe kaschieren, wobei dieser Maßnahme die Einspeisung eines Steigrohres gegenübersteht, so daß die Herstellung des erfindungsgemäßen Behälters praktisch keine zusätzlichen Kosten erfordert. Außerdem gibt der erfindungsgemäße Behälter auch in der Überkopflage zuverlässig seinen Inhalt ab.

Weitere Einzelheiten der Erfindung ergeben sich aus der nachfolgenden Beschreibung sowie anhand der Zeichnung. Dabei zeigen:
- Fig. 1: eine teilweise geschnittene Seitenansicht eines erfindungsgemäßen Behälters mit eingebauter Pumpe und bereits teilweise entleertem Innenbeutel;
- Fig. 2: einen Längsschnitt durch den Behälter gemäß Fig. 1;
- Fig. 3: eine perspektivische Ansicht des Behälters;
- Fig. 4a-4c: aufeinanderfolgende Verfahrensschritte bei der Herstellung des Behälters im Coextrusionsblasverfahren;
- Fig. 5: einen Querschnitt durch den Quetschbereich im Schulterabschnitt;
- Fig. 6: einen Querschnitt durch den Bereich des Schnapprings und
- Fig. 7: einen Querschnitt durch den Bereich der Bodenschweißnähte des Innenbeutels und des Außenbehälters.

Es wird zunächst auf die Figuren 4a bis 4c Bezug genommen, die aufeinanderfolgende Schritte zur Herstellung eines erfindungsgemäßen flaschenförmigen Behälters zeigen. Ein aus zwei konzentrischen Materialschichten bestehender, schlauchförmiger Vorformling 1 tritt aus einem Extrusionskopf 2 aus und wird zwischen den geöffneten Hälften einer Blasform 3 angeordnet, die geschlossen wird, wenn der Vorformling 1 die zur Herstellung eines flaschenförmigen Behälters erforderliche Länge erreicht hat. Der Vorformling 1 besteht aus einer äußeren Materialschicht 4 zur Ausbildung eines formstabilen Außenbehälters 5 sowie aus einer inneren Materialschicht 6, die zu einem leicht verformbaren Innenbeutel 7 aufgeblasen wird. Die beiden Materialschichten 4 und 6 bestehen aus unterschiedlichen thermoplastischen Kunststoffen, die nicht miteinander verschweißbar sind.

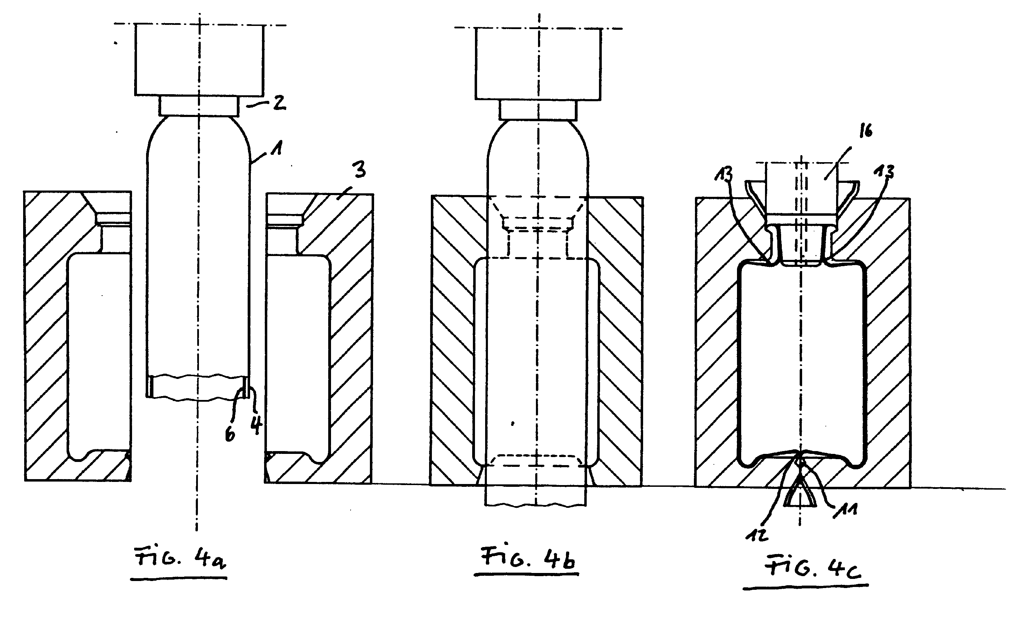

Wie die gegenüber den Figuren 4a und 4c um 90° gedrehte Darstellung der Fig. 4b erkennen läßt, hat der Vorformling 1 einen Durchmesser, der größer ist als der Außendurchmesser des Halses 8 des flaschenförmigen Behälters und der andererseits kleiner ist als der Außendurchmesser der zylindrischen Außenwand 9 des Behälters.

Dies hat zur Folge, daß beim Schließen der beiden Formhälften überschüssiges Material sowohl im Bereich der Schultern 10 und des Halses 8 als auch im Bodenbereich abgequetscht wird.

Während hierbei im Bereich der Schulter 10 und des Halses 8 an der Quetschkante das Material der Innenschicht 6 zwischen dem Material der Außenschicht 4 liegt, was verhindert, daß die äußere Materialschicht 4 miteinander verschweißt wird, wird im Bodenbereich vorzugsweise durch besondere Formgebung der Blasform eine nach außen vorspringende Schweißnaht 11 gebildet, die wenigstens teilweise,d.h. im Bereich von einigen Zehntel Millimeter, aus der äußeren Materialschicht 4 besteht, wodurch im Bereich der bodenseiten Quetschkante der Außenbehälter 5 verschlossen wird. Durch an den Blasformschritt anschließende Verlagerung von noch plastischem Material der Bodenschicht kann auch eine vollständig, d.h. über ihre gesamte Höhe geschlossene Schweißnaht 11 ausgebildet werden.

Der Innenbeutel 7 hingegen wird in beiden Quetschbereichen, d.h. am Boden und im Schulter- und Halsbereich verschweißt, da beim Schließen der Formhälften das Material der Innenschicht 6 ohne Zwischenschaltung eines anderen Materials gegeneinander gepreßt wird, so daß in den Quetschbereichen dichte Schweißnähte 12 und 13 entsteht.

Die im Schulter- und Halsbereich des Außenbehälters 5 entstandenen unverschweißten Nähte 14 lassen einen Lufteintritt in den Zwischenraum 15 zwischen dem formstabilen Außenbehälter 5 und dem flexiblen Innenbeutel 7 zu.

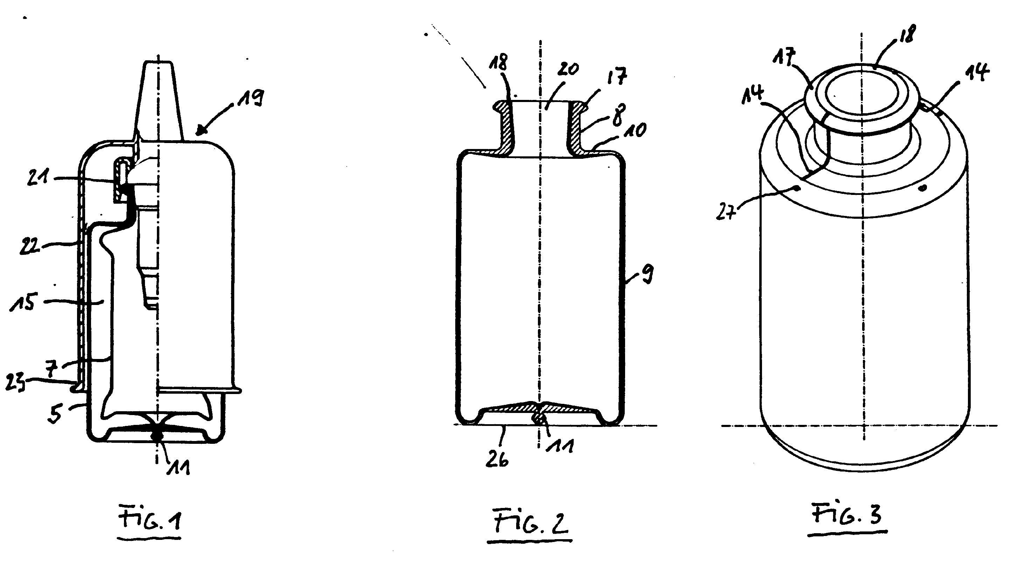

Die bodenseitige Schweißnaht 12 des Innenbeutels 7 ist, wie insbesondere die Figuren 2 und 7 erkennen lassen, im Beutel des Außenbehälters 5 verankert, so daß der Innenbeutel 7 bei seiner Entleerung in axialer Richtung gehalten ist, wie Figur 1 andeutet.

Nachdem die beiden Hälften der Blasform 3 geschlossen sind, wird ein Kalibrierdorn 16 in den Formhohlraum eingeführt, um den Hals 8 des Behälters mit einem nach außen weisenden Schnappring 17 fertig auszubilden und überschüssiges Material abzuquetschen, wobei zudem der Vorformling zu dem fertigen Behälter aufgeblasen wird. Durch das Kalibrieren tritt eine gewisse Vermischung des Materials der Außenschicht 4 und der Innenschicht 6 auf, so daß der Innenbeutel 7 im Halsbereich an dem Außenbehälter 5 gehalten ist, wozu auch eine nach außen weisende kleine Randverdickung 18 am oberen Rand des Innenbeutels 7 beiträgt, die sich innen an den Schnappring 17 anlegt. Der Schnappring 17 wird durch die durch den Kalibrierdorn 16 hervorgerufene Verformung im Bereich der Quetschnähte verschweißt, da durch die Materialbewegung Außenschichtmaterial in diesen Bereichen miteinander in Berührung kommt.

Eine Pumpe 19 greift -wie Fig. 1 zeigt- in die Behälteröffnung 20 ein und hintergreift mit einem ringförmigen Ansatz an einer zylindrischen Wand 21 den Schnappring 17, der hierdurch selbst dann fest zusammen gehalten ist, wenn er im Bereich der Quetschnähte nur unvollständig zusammengeschweißt sein sollte. Die Pumpe 19 enthält ferner eine ebenfalls zylindrische Außenwand 22, die die Öffnungen des Außenbehälters 5 vollständig abdeckt und sich nahezu bis zum Bodenbereich des Behälters erstreckt. Zur Betätigung der Pumpe 19 ist am unteren Ende der Umfangswand 22 ein nach außen weisender Halteabschnitt 23 angeformt.

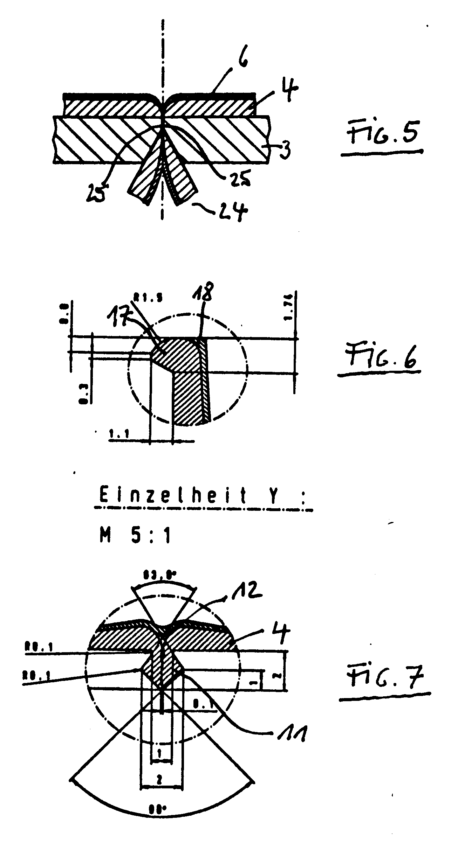

Fig. 5 zeigt in einer vergrößerten Darstellung eine Quetschnaht im Bereich der Schulter 13 und des Halses 8 des Behälters. Durch Quetschkanten 25 der beiden Formhälften 3 wird überschüssiges Material 24 abgequetscht, wobei sich innerhalb der Form 3 eine feste Schweißnaht des Innenbeutels 7 bildet, da dessen Materialschicht 6 aneinander anliegt, während die Materialschicht 4 durch die dazwischen liegende Schweißnaht der Materialschicht 6 voneinander beabstandet ist und nicht miteinander verschweißt wird. Hierdurch entsteht eine Lufteintrittsöffnung 14 in dem Außenbehälter 5.

Fig. 7 zeigt in vergrößerter Darstellung die Bodenschweißnaht 11 des Außenbehälters 5, die durch besondere Formgebung der Blasformhälften ausgebildet werden kann. Die Schweißnaht 11 ist eine querschnittlich etwa drachenförmige untere Verlängerung der Materialschicht 4, wodurch ein verdickter Bereich gebildet ist, in dem die innenliegende Schweißnaht 12 der Innenschicht 6 fest eingebettet bzw. fest eingeklemmt ist. In der Bodenschweißnaht 11 liegt Material des Außenbehälters, das von beiden Seiten der Naht zusammengeführt ist, wenigstens über einen Teil der Nahthöhe aneinander an, wodurch eine ausreichende Verschweißung stattfindet, um den Boden zu schließen und den Innenbeutel in axialer Richtung zu halten. Bezüglich einer bevorzugten Ausbildung der Schweißnaht 11 wird auf die Abmessungen der Fig. 7 hingewiesen.

Fig. 6 zeigt in einer vergrößerten Darstellung Einzelheiten der Form des Schnapprings 17 am oberen Rand des sich leicht kegelförmig verbreiternden Halses 8 des erfindungsgemäßen Behälters.

Fig. 3 zeigt Löcher 27 in dem radial äußeren ringförmigen Bereich des Schulterabschnitts des Außenbehälters 5.

Mit Bezug auf die Fig. 1 und 2 sei angemerkt, daß der mittige Bodenbereich des Behälters so weit nach innen konkav zurückversetzt ist, daß die vorspringende Bodenschweißnaht 11 in der Ebene 26 der Standfläche des Behälters endet, so daß die Standfestigkeit des Behälters nicht beeinträchtigt ist.

## Patentansprüche

1. Im Coextrusionsblasverfahren hergestellter Behälter mit einem im wesentlichen formstabilen Außenbehälter (5) und einem leicht verformbaren Innenbeutel (7), die aus unterschiedlichen, keine Schweißverbindung miteinander eingehenden thermoplastischen Kunststoffen bestehen, mit Schulterabschnitt (13) und Behälteröffnung (20), die mit einer Pumpe (19) versehen werden kann, wobei der Innenbeutel (7) im Bodenbereich mit einer Schweißnaht (12) verschlosen ist,
**dadurch gekennzeichnet**,
daß der Außenbehälter (5) im Bodenbereich eine wenigstens teilweise verschweißte Naht (11) aufweist, in der der Innenbeutel (7) mit seiner Schweißnaht (12) eingeklemmt und in axialer Richtung gehalten ist, und daß der Außenbehälter (5) an seinem Schulterabschnitt (13) wenigstens eine unverschweißte Nahtstelle (14) mit gegenüberliegenden, unverbundenen Wandbereichen (4) aufweist, während der Innenbeutel (7) in diesem Bereich durch wenigstens eine Schweißnaht dicht verschlossen ist.

2. Behälter nach Anspruch 1,
dadurch gekennzeichnet, daß sich zwei unverschweißte Nähe (14) wenigstens über einen Teil der beiden Schulterabschnitte (13) bis zu der Behälteröffnung (20) erstrecken.

3. Behälter nach Anspruch 1 oder 2,
dadurch gekennzeichnet, daß eine geschlossene Naht (14) im Bodenbereich des Außenbehälters (5) dadurch ausgebildet ist, daß beiderseits der Naht Material des Außenbehälters zur Bildung eines vorstehenden Steges (11) zusammengeführt wird.

4. Behälter nach einem der Ansprüche 1 bis 3,
dadurch gekennzeichnet, daß ferner wenigstens ein Loch (27), vorzugsweise mehrere Löcher (27) in der Wand des Außenbehälters (5) ausgebildet ist bzw. sind.

5. Behälter nach Anspruch 4,
dadurch gekennzeichnet, daß das Loch bzw. die Löcher im Bereich des Schulterabschnitts und/oder im oberen Wandbereich des Behälters (5) ausgebildet sind.

6. Behälter nach einem der Ansprüche 1 bis 5,
dadurch gekennzeichnet, daß die unverschweißten Nähte (14) des Schulterabschnitts und gegebenenfalls die Löcher (27) von einem Gehäuse (22) der Pumpe (19) außen überdeckt sind.

7. Behälter nach einem der Ansprüche 1 bis 6,
dadurch gekennzeichnet, daß er durch Blasformen aus einem coextrudierten schlauchförmigen Vorformling (1) ausgebildet ist, dessen Durchmesser größer ist als der Durchmesser des Halses (8) des fertigen Behälters.

8. Verfahren zur Herstellung eines Behälters mit einem im wesentlichen formstabilen Außenbehälter (5) und einem leicht verformbaren Innenbeutel (7), bei dem
ein zweischichtiger, schlauchförmiger Vorformling (1) aus unterschiedlichen, keine Schweißverbindung miteinander eingehenden Kunststoffen extrudiert wird, der einen größeren Durchmesser hat als der Hals (8) des herzustellenden Behälters,
daß der im warmen Zustand befindliche Vorformling (1) durch Schließen der Blasform im Bodenbereich und im Schulterbereich des herzustellenden Behälters unter Beseitigung von Überschußmaterial abgequetscht wird, dadurch gekennzeichnet,
daß hierbei beiderseits der bodenseitigen Naht (12) Material des Außenbehälters (5) zur Bildung eines vorstehenden Steges (11) zusammengeführt wird, so daß die bodenseitige Schweißnaht (12) des Innenbeutels (7) in der geschlossenen Naht (11) des Außenbehälters (5) wenigstens teilweise eingeklemmt wird.

9. Verfahren nach Anspruch 8,
dadurch gekennzeichnet, daß nach dem Blasvorgang Unterdruck auf den Innenbeutel (7) aufgebracht wird, so daß sich dieser zusammenzieht und wenigstens bereichsweise von der Wand des Außenbehälters (5) löst, und daß wenigstens ein Loch (22) in der Wand des Außenbehälters ausgebildet (5) wird.

10. Verfahren nach Anspruch 8 oder 9,
dadurch gekennzeichnet, daß der Druckausgleich in dem Zwischenraum (15) zwischen dem Außenbehälter (5) und dem Innenbeutel (7) beim Aufbringen von Unterdruck auf den letzteren dadurch gefördert wird, daß der Behälter seitlich derart zusammengedrückt wird, so daß die unverschweißten Schulternähte (14) des Außenbehälters (5) weiter voneinander beabstandet werden.

## Claims

1. A container made in a coextrusion blow molding process and comprising a substantially dimensionally stable outer container (5) and an easily deformable inner bag (7) which consist of different thermoplastic materials that do not form a weld joint with each other, a shoulder section (13) and a container opening (20) which may be provided with a pump (19), said inner bag (7) being closed on its bottom with a weld seam (12),
**characterized in**
that on its bottom said outer container (5) comprises a closed, at least partly welded seam (11), said weld seam of said inner bag (7) being claimped in the weld seam (11) of said outer bag and said inner bag being held in axial direction, and that on its shoulder section (13) said outer container (5) comprises at least one unwelded seam (14) that is formed by opposite wall sections (4) which are not interconnected whereas the inner bag (7) is tightly closed in said area by at least one weld seam.

2. A container according to claim 1,
characterized in that two unwelded seams (14) extend at least over part of said two shoulder sections (13) up to the container opening (20).

3. A container according to claim 1 or 2,
characterized in that said closed seam (14) is formed on the bottom of said outer container (5) by uniting material of said outer container at both sides of said seam to form a projecting web (11).

4. A container according to one of claims 1 to 3,
characterized in that at least one hole (27) or preferably a plurality of holes (27) is/are formed in the wall of said outer container (5).

5. A container according to claim 4,
characterized in that said hole or holes are formed in the area of said shoulder section and/or in the upper wall portion of said outer container.

6. A container according to one of claims 1 to 5,
characterized in that the unwelded seams (14) of said shoulder section and said holes (27) are externally covered by a housing (22) of said pump (19).

7. A container according to one of claims 1 to 6,
characterized in that it is formed by blow molding from a coextruded tubular preform (1) whose diameter is greater than the diameter of the neck (8) of the finished container.

8. A method of making a container comprising a substantially dimensionally stable outer container (5) and an easily deformable inner bag (7),
wherein a two-layered tubular preform (1) of different thermoplastic materials that do not form a weld joint with each other is extruded with a diameter greater than the neck (8) of the container to be made,
said preform (1) in its hot state is squeezed off in the bottom area and in the shoulder area of the container to be made by closing the blow mold, with excess material being removed, characterized in that material of the outer container (5) is combined at both sides of the bottom seam (12) to form a projecting web (11), so that the weld seam (12) of the inner bag (7) at the bottom side is at least partly clamped in the closed seam (11) of said outer container (5).

9. A method according to claim 8,
characterized in that after the blow molding operation a negative pressure is applied to said inner bag (7), so that the latter contacts and detaches at least in portions from the wall of said outer container (5), and that at least one hole (22) is formed in the wall of said outer container (5).

10. A method according to claim 8 or 9,
characterized in that pressure compensation in the space (15) between said outer container (5) and said inner bag (7) is promoted during the exertion of a negative pressure on said inner bag (7) by laterally compressing said container in such a way that the unwelded shoulder seams (14) of said outer container (5) are further spaced apart from each other.

## Revendications

1. Récipient fabriqué selon le procédé de co-extrusion-soufflage avec un récipient externe (5) sensiblement indéformable et d'une poche interne (7) facilement déformable qui se composent de matières thermoplastiques différentes non jointes par soudure, avec une section d'épaulement (13) et une ouverture de récipient (20) qui peut être munie d'une pompe (19), la poche interne (7) étant fermée dans la zone de fond par une soudure (12),
caractérisé en ce que
le récipient externe (5) présente dans la zone de fond une couture (11) soudée au moins partiellement, dans laquelle la poche interne (7) est coincée par sa soudure (12) en étant maintenue dans le sens axial et en ce que le récipient externe (5) présente sur sa section d'épaulement (13) au moins un point de couture non soudé (14) avec des zones de paroi (4) opposées non jointes tandis que la poche interne (7) est fermée de manière étanche dans cette zone par au moins une soudure.

2. Récipient selon la revendication 1,
caractérisé en ce que deux coutures non soudées (14) s'étendent au moins sur une partie des deux sections d'épaulement (13) jusqu'à l'ouverture de récipient (20).

3. Récipient selon la revendication 1 ou 2,
caractérisé en ce qu'une couture fermée (14) est réalisée dans la zone de fond du récipient externe (5) de sorte que des deux cotés de la couture, la matière du récipient externe est rapprochée pour former une nervure saillante (11).

4. Récipient selon l'une des revendications 1 à 3,
caractérisé en ce que, de plus, au moins un trou (27), de préférence plusieurs trous (27) est resp. sont ménagé(s) dans la paroi du récipient externe (5).

5. Récipient selon la revendication 4.
caractérisé en ce que le trou resp. les trous sont ménagés dans la zone de la section d'épaulement et/ou dans la zone supérieure de paroi du récipient (5).

6. Récipient selon l'une des revendications 1 à 5,
caractérisé en ce que les coutures non soudées (14) de la section d'épaulement et éventuellement les trous (27) sont recouverts à l'extérieur par un carter (22) de la pompe (19).

7. Récipient selon l'une des revendications 1 à 6,
caractérisé en ce qu'il est réalisé par soufflage à partir d'une paraison tubulaire (1) co-extrudée dont le diamètre est supérieur au diamètre du col (8) du récipient fini.

8. Procédé pour la fabrication d'un récipient avec un récipient externe (5) sensiblement indéformable et une poche interne (7) facilement déformable, selon lequel une paraison tubulaire (1) à deux couches en matières plastiques différentes non jointes par soudure, présente un diamètre plus grand que le col (8) du récipient à fabriquer, selon lequel la paraison (1) se trouvant à l'état chaud est comprimée par fermeture du moule de soufflage dans la zone de fond et dans la zone d'épaulement du récipient à fabriquer en éliminant l'excédent de matière, caractérisé en ce que, pour ce faire, des deux cotés de la couture (12) du coté du fond, la matière du récipient externe (5) est rassemblée pour former une nervure saillante (11), de sorte que la soudure (12) du coté du fond de la poche interne (7) est coincée au moins partiellement dans la couture fermée (11) du récipient externe (5).

9. Procédé selon la revendication 8,
caractérisé en ce qu'après le procédé de soufflage, il est appliqué une sous-pression sur la poche interne (7) de sorte que celui-ci se rétracte et se détache au moins par zone de la paroi du récipient externe (5) et qu'au moins un trou (22) soit formé dans la paroi du récipient externe (5).

10. Procédé selon la revendication 8 ou 9,
caractérisé en ce que la compensation de pression dans l'espace intermédiaire (15) entre le récipient externe (5) et la poche interne (7), à l'application de la sous-pression sur cette dernière, est favorisée par le fait que le récipient est comprimé sur les cotés de sorte que les coutures d'épaulement non soudées (14) du récipient externe (5) sont écartées davantage les unes des autres.
